## Europäisches Patentamt
## European Patent Office
## Office européen des brevets

(19)

(11) Veröffentlichungsnummer: **0 018 431**
**B1**

(12) **EUROPÄISCHE PATENTSCHRIFT**

(45) Veröffentlichungstag der Patentschrift: **13.10.82**

(51) Int. Cl.³: **C 08 F 10/02, C 08 F 2/34**

(21) Anmeldenummer: **79101755.1**

(22) Anmeldetag: **02.06.79**

(54) Verfahren zur intermittierenden Polymerisation bei erhöhtem Druck und Anlage zur Durchführung des Verfahrens.

(30) Priorität: **26.04.79 CH 3960/79**

(43) Veröffentlichungstag der Anmeldung:
**12.11.80 Patentblatt 80/23**

(45) Bekanntmachung des Hinweises auf die Patenterteilung:
**13.10.82 Patentblatt 82/41**

(84) Benannte Vertragsstaaten:
**DE FR GB**

(56) Entgegenhaltungen:
**FR - A - 2 320 136**

(73) Patentinhaber: **Maschinenfabrik Burckhardt AG**
**Dornacherstrasse 210**
**CH-4000 Basel (CH)**

(72) Erfinder: **Bauer, Helmut**
**Marignanostrasse 21**
**CH-4059 Basel (CH)**

(74) Vertreter: **Sparing, Nikolaus, Dipl.-Ing.**
**Rethelstrasse 123**
**D-4000 Düsseldorf 1 (DE)**

Courier Press, Leamington Spa, England.

# Verfahren zur intermittierenden Polymerisation bei erhöhtem Druck und Anlage zur Durchführung des Verfahrens.

Die Erfindung betrifft ein Verfahren zur intermittierenden Polymerisation bei erhöhtem Druck sowie eine Anlage zur Durchführung des Verfahrens.

Die Polymerisation bei erhöhtem Druck hat besonders zur Herstellung von Polyäthylen geringer Dichte eine grosse wirtschaftliche Bedeutung erlangt. Beim bisherigen Stand der Technik wird das Aethylengas zunächst auf einen Vordruck von ca. 250 bar gebracht und anschliessend in einem, in der Regel zweistufigen Kompressor auf den zur Reaktion erforderlichen Druck verdichtet, der üblicherweise zwischen 1500 bar und 2500 bar liegt, gelengentlich sogar noch höher. Anschliessend wird das Gas auf eine Temperatur erwärmt, die zur Durchführung der Reaktion erforderlich ist; sie beträgt etwa 170°C. Das Gas wird hierauf in einen Reaktor geleitet, wo durch einen Katalysator bzw. Initiator die Polymerisation ausgelöst wird. Es werden zwei verschiedene Typen von Reaktoren verwendet, und zwar Autoclav-Reaktoren oder Röhrenreaktoren; beide Reaktortypen arbeiten kontinuierlich.

Die Polymerisation ist ein exothermer Prozess; sie muss so gesteuert werden, dass eine Temperatur von ca. 300°C nicht überschritten wird, weil sonst das Aethylen explosionsartig zerfällt. Je nach dem verwendeten Reaktionsdruck beträgt die Ausbeute an Polyäthylen 18% bis 28% der zugeführten Gasmenge. Bei den im Reaktor herrschenden Bedingungen ist dieses Polyäthylen im Gas gelöst und kann daher nicht ohne weiteres abgeschieden werden. Damit es aus der Lösung fällt, muss das Gemisch bis auf einen Vordruck von beispeilsweise 250 bar entspannt werden. Dann kann das Produkt in Form einer heissen Flüssigkeit abgeschieden werden. Die Gasmenge, die an der Reaktion nicht teilgenommen hat, wird wieder dem zweistufigen Kompressor zur erneuten Verdichtung auf den Reaktionsdruck zugeführt. Es muss deshalb ein Mehrfaches der Gasmenge auf den hohen Druck verdichtet werden, als an der Reaktion teilnimmt, und die aufgewendete Kompressionsarbeit geht bei der nachfolgenden Entspannung verloren. Der Energiebedarf zur Herstellung von Polyäthylen nach bisher bekannten Verfahren ist deshalb erheblich.

Darüberhinaus erfordert die Anlage zur Durchführung des Verfahrens einen beträchtlichen apparativen Aufwand.

Die Erfindung bezweckt die Schaffung eines intermittierenden Verfahrens, das sich durch einen erheblich geringeren Energieaufwand, bei geeigneter Wahl der Betriebsbedingungen sogar durch einen Energiegewinn, auszeichnet und zudem für seine Durchführung eine verhältnismässig einfache Anlage mit erprobten Maschinen und Anlageteilen erfordert.

Das erfindungsgemässe Verfahren ist dadurch gekennzeichnet, dass die zu polymerisierende Substanz in Gas- oder Dampfform taktweise dem Arbeitsraum eines volumetrisch zwischen zwei Druckstufen arbeitenden Kompressor zugeführt und im Arbeitsraum komprimiert wird, und dass ein die Polymerisation steuernder Katalysator spätestens im Anfangsbereich der Expansion im Arbeitsmittelraum des Kompressors anwesend ist.

Die Anlage zur Durchführung des erfindungsgemässen Verfahrens ist gekennzeichnet durch einen volumetrisch arbeitenden Kompressor mit mindestens einem Arbeitsraum, der an eine Zuführleitung für die zu polymerisierende Substanz angeschlossen ist, weiter durch Mittel zum Einführen eines die Polymerisation steuernden Katalysators bzw. Initiators in die zu polymerisierende Substanz sowie durch Mittel zum Abscheiden des Polymerisats aus der auf einen Teildruck entspannten Ladung.

Die Erfindung und weitere mit ihr zusammenhängende Merkmale und Vorteile sind anhand der in der Zeichnung dargestellten Ausführungsbeispiele von Anlagen und Teilen derselben näher erläutert. Es zeigen:

Fig. 1 eine Anlage in schematischer Darstellung mit einem einfach wirkenden Hubkolbenkompressor;

Fig. 2 ein Druck-Volumen-Diagramm für ein in der Anlage nach Fig. 1 ausführbares Verfahren;

Fig. 3a, 3b und 3c in schematischer Darstellung die für das Erreichen bestimmter Betriebsgrössen notwendigen Konstruktionsmerkmale für den Hubkolbenkompressor gemäss Fig. 1;

Fig. 4 eine Fig. 1 entsprechende Anlage, die jedoch mit einem Doppelkolben-Kompressor ausgerüstet ist, und

Fig. 5 einen Hubkolbenkompressor gemäss Fig. 1 mit einem Einspritzventil für den Katalysator in einem Längsschnitt durch die Zylinderachse.

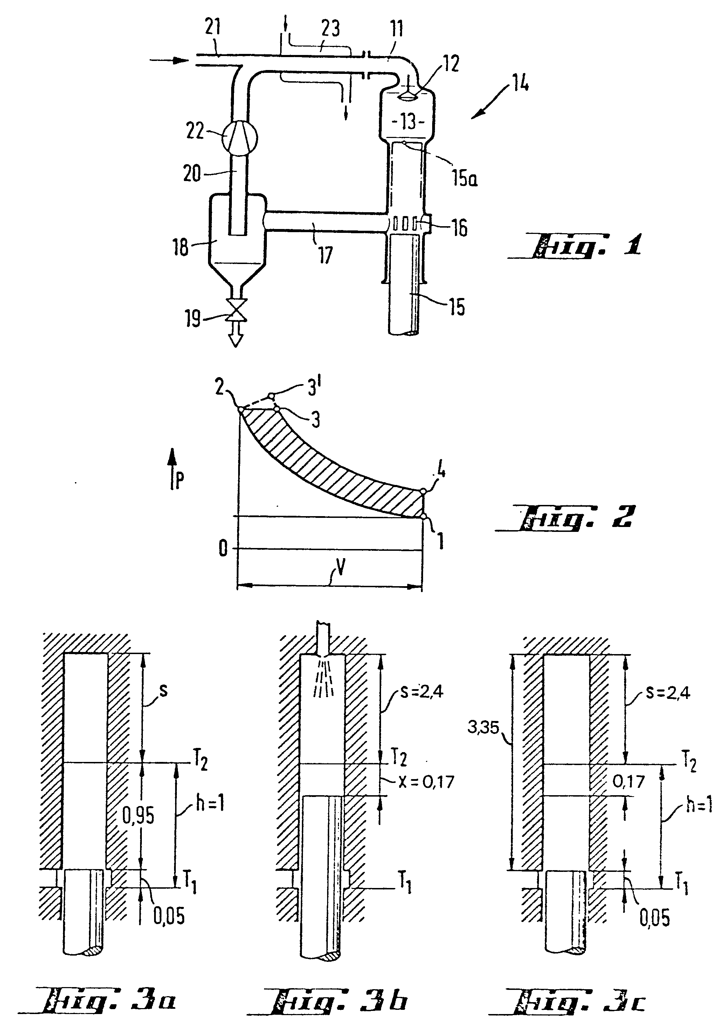

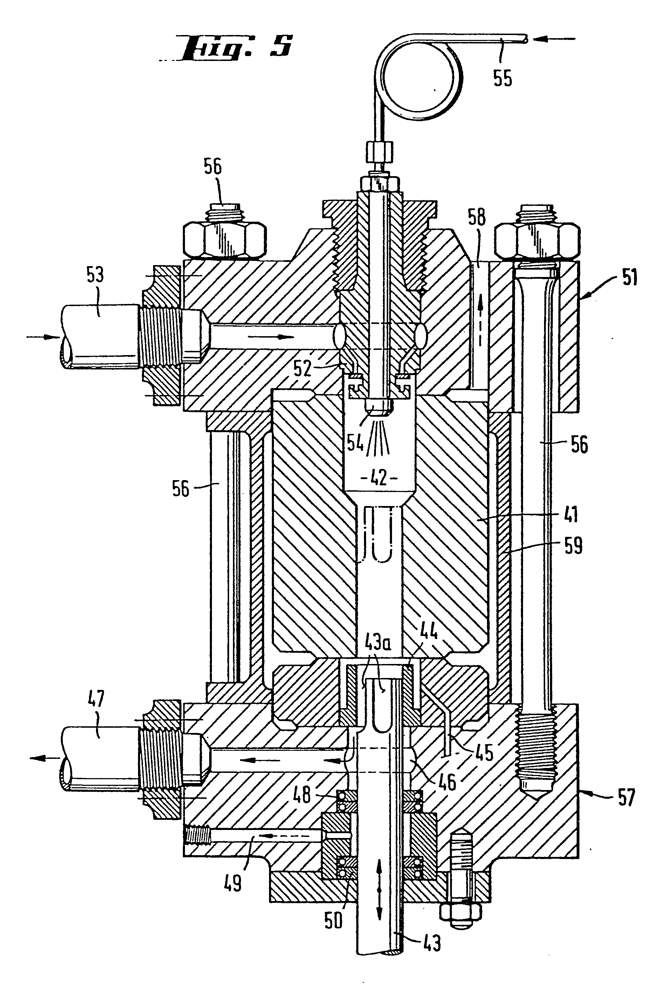

In der anlage nach Fig. 1 wird das zu polymerisierende Polyäthylengas durch die Leitung 11 über das Saugventil 12 dem Arbeitsraum 13 des Kompressors 14 zugeführt. Der Kolben 15 verdichtet das Gas während seines Hubes aus der gezeichneten äusseren Totpunktlage in die durch strichpunktierte Linien angedeutete innere Totpunktlage 15a. Der Arbeitsraum 13 bildet den Reaktionsraum, in welchem das Gas polymerisiert wird; das als Schadraum wirkende Volumen ist verhältnismässig gross gegenüber dem Hubvolumen. In der gezeichneten äusseren Totpunktlage des Kolbens 15 gibt dieser Auspuffschlitze 16 frei, an welche die Leitung 17 anschliesst, welche in den Abscheider 18 mündet. Dieser ist als Zentrifugalabscheider ausgebildet; es könnte aber auch ein Abscheider anderer Bauweise benützt werden, z.B. ein Abscheider mit Prallplatten, mit Filtern etc. Das im Abscheider 18 ausgeschiedene flüssige Polymerisat kann über das Ventil 19 entnommen werden, während das restliche Gas, das nicht an der Reaktion teilgenommen hat, über die Leitung 20 wieder der Leitung 11 zugeführt werden kann. In die Leitung 20 kann Frischgas aus der Leitung 21 eingespeist werden, das in einem nicht gezeichneten Kompressor vorkomprimiert worden ist. Die Druckverhältnisse sind zweckmässig so gewählt, dass in der Leitung 11 ein geringfügig höherer Druck herrscht als im Abscheider 18. Damit öffnet sich das Ventil 12 selbsttätig zur Spülung und Neufüllung des Arbeitsraumes 13. Der geringe Druckunterschied zwischen dem Abscheider 18 und der Leitung 11 muss den Oeffnungswiderstand des Ventils 12 überwinden. Für die Rückführung des Gases ist daher ein Gebläse 22 notwendig. Ferner weist die Anlage einen Wärmeübertrager 23 auf, der es gestattet, durch Heizung oder Kühlung eine geeignete Temperatur des dem Kompressor 14 zuströmenden Gases einzuhalten. In Fig. 1 sind keine Mittel zum Einführen des Katalysators in den Arbeitsraum 13 gezeichnet; ein dafür geeignetes Einspritzventil sowie weitere konstruktive Merkmale des Kompressors 14 sind im Zusammenhang mit dem Ausführungsbeispiel gemäss Fig. 5 erläutert.

Der dem Verfahren zugrundeliegende Kreisprozess ist aus Fig. 2 ersichtlich. Im äusseren Totpunkt des Kompressorkolbens 15 wird bei Punkt 1 das Hubvolumen des Kompressors mit Aethylen unter dem in der Leitung 11 herrschenden Vordruck gefüllt. Beim anschliessenden Kompressionshub wird das Gas entlang der Linie 1—2 verdichtet. Durch entsprechende Bemessung des schädlichen Raumes wird bewirkt, dass der gewünschte Reaktionsdruck in Punkt 2 gerade im inneren Totpunkt 15a des Kolbens erreicht wird. Während der Kompression steigt ebenfalls die Temperatur des Gases. Durch geeignete Wahl der Temperatur in Punkt 1 kann erreicht werden, dass in Punkt 2 die für die gewünschte Reaktion geeignete Temperatur vorliegt, z.B. durch entsprechende Heizung oder Kühlung mittels des Wärmeübertragers 23.

In Punkt 2 haben somit Druck wie Temperatur die vorbestimmten Werte, die zur Einleitung der Polymerisation durch den Katalysator erforderlich sind. Es empfiehlt sich, die genau dosierte Menge an Katalysator ab Punkt 2 in feiner Verteilung in den Arbeitsraum 13 einzuführen. Von Punkt 2 bis Punkt 3 findet die Polymerisation statt, wobei die Temperatur des Gases sehr rasch ansteigt. Da wegen der Kürze der Zeit eine Kühlung unmöglich ist, ist das Gas bestrebt, sein Volumen entsprechend der steigenden Temperatur zu vergrössern. Der Kolben befindet sich aber bereits innerhalb des Expansionshubes und stellt daher ein wachsendes Volumen zur Verfügung. Durch geeignete Wahl der Betriebsbedingungen kann z.B. erreicht werden, dass die Polymerisation entlang der Strecke 2—3 ohne nennenswerte Druckänderung erfolgt.

Ein Ansteigen der Temperatur über etwa 300°C hinaus muss vermieden werden, weil sonst die Gefahr eines explosiven Zerfalls des Gases besteht. Die Reaktion muss also in Punkt 3 rechtzeitig unterbrochen werden. Dies erfolgt auf einfache Weise durch entsprechende Dosierung und Unterbrechung der Katalysatorzufuhr. Der Katalysator muss in Punkt 3 in der Wirkung verbraucht sein, damit die Reaktion zum Stillstand kommt.

Entlang der Linie 3—4 erfolgt anschliessend die Expansion des heissen Gases. Im Bereich des äusseren Totpunktes wird bei Freigabe des Schlitzes 16 (Fig. 1) durch den Kolben der Zylinderinhalt entsprechend der Linie 4—1 entleert und über die Leitung 17 in den Abscheider geschickt, in welchem die Trennung von Gas und von heissem, flüssigem Polymerisat stattfindet, das durch die Drucksenkung aus seinem vorhergehenden gelösten Zustand ausgefallen ist. Anschliessend wird der Arbeitsraum 13 neu gefüllt und der Kreisprozess beginnt von neuem.

Das Diagramm gemäss Fig. 2 ist stark vereinfacht gezeichnet. So könnte während der Polymerisation trotz beginnendem Expansionshub ein Druckanstieg, z.B. nach der gestrichelten Linie 2—3' stattfinden. Weiter ist der Punkt 4 entsprechend der vor dem äusseren Totpunkt beginnenden Oeffnung des durch die Schlitze 16 gebildeten Auslasses etwas gegen den inneren Totpunkt versetzt.

Der Linienzug 1—2—3—4—1 umschliesst eine positive, schraffierte Fläche, d.h. beim geschilderten Prozess wird Leistung abgegeben, im Gegensatz zu bisherigen Verfahren, welche Leistung ohne Rekuperation verbrauchen.

Um Produkte mit unterschiedlichen Eigenschaften zu erzeugen, kann es wünschenswert sein, die Polymerisation bei entsprechend angepassten Reaktionsdrücken durchzuführen. Dies kann auf an und für sich bekannte Weise, z.B. durch Veränderung des schädlichen Raumes oder des Kolbenhubes erfolgen. Die Steuerung des Ladungswechsels zwischen Punkt 4 und Punkt 1 könnte z.B. auch mit gesteuerten Ventilen erfolgen. Besonders einfach ist jedoch die im Zweitakt arbeitende Anlage gemäss Fig. 1, wo das Ventil 12 als selbsttätig wirkendes Saugventil ausgebildet ist.

Für die Kompression ergeben sich in Verbindung mit Fig. 3a für einen zylindrischen Arbeitsraum und unter der vereinfachten Annahme, dass der Vorgang adiabatisch abläuft und der sich zwischen dem äusseren Totpunkt $T_1$ und dem inneren Totpunkt $T_2$ bewegende Kolben hermetisch dichtet, beispielsweise folgende Verhältnisse:

 Anfangsdruck $p_1 = 250$ bar
 Anfangstemperatur $t = 40°C$
 Spez. Vol. $v_1 = 0,0025$ m³/kg
 Enthalpie $i_1 = 400 \times 10^3$ J/kg

Für den Endzustand der Kompression in Punkt 2 sind z.B. für den schematisch in Fig. 3a gezeichneten Kompressor folgende Werte vorgegeben:

Enddruck $p_2 = 2500$ bar
Temperatur $t_2 = 130°C$
Spez. Vol. $v_2 = 0,0018$ m³/kg
Enthalpie $i_2 = 830 \times 10^3$ J/kg

Damit ergibt sich unter der Annahme eines Hubverlustes von 5% für den Auslass folgende Beziehung für den Schadraum:

$$\frac{0,95 + s}{s} = \frac{v_1}{v_2}$$

Damit wird $s = 2,4$ wenn der gesamte Hub h des Kolbens mit 1,0 angenommen wird.

Gemäss Fig. 2 wird die Einspritzung des katalysators zweckmässig so gesteuert, dass der Druck etwa konstant bleibt während der Polymerisationsreaktion. Da der Vorgang exotherm ist und eine Wärmeabfuhr bei der Kürze der zur Verfügung stehenden Zeit nicht möglich ist, steigt die Temperatur wie bereits erwähnt sehr rasch an. Durch Abstellen der Einspritzung wird der Vorgang zweckmässig derart unterbrochen, dass in Punkt 3 eine Temperatur von 300°C nicht überschritten wird. Für reines Aethylen ergibt sich damit etwa folgender Endzustand in Punkt 3:

$P_3 = 2500$ bar
$t_3 = 300°C$
$v_3 = 0,0021$ m³/kg
$i_3 = 1290 \times 10^3$ J/kg

Für den während der Einspritzung zurückgelegten Kolbenweg x gilt gemäss Fig. 3b:

$$\frac{s}{x + s} = \frac{v_2}{v_3}$$

Damit wird $x = 0,17$, d.h. die Katalysatoreinspritzung erfolgt über die ersten 17% des Expansionshubes.

Für die eigentliche Expansion erhält man gemäss Fig. 3c folgenden Wert für das spezifische Volumen vor dem Oeffnen des Auspuffschlitzes:

$$\frac{v_4}{v_3} = \frac{3,35}{2,4 \times 0,17}$$

Somit wird $v_4 = 2,73$ und man erhält folgende Zustandswerte vor dem Oeffnen des Auspuffschlitzes:

$p_4 = 800$ bar
$t_4 = 230°C$
$v_4 = 0,0027$ m³/kg
$i_4 = 913 \times 10^3$ J/kg

Nach dem Oeffnen des Auspuffs sinkt der Druck schlagartig auf 240 bar, vergleichbar mit der durch periodisches Oeffnen von Ventilen herbeigeführten, schlagartigen Druckabsekung bei der Polymerisation mittels Röhrenreaktoren. Damit wird der Zylinder von Rückstanden gereinigt. Anschliessend öffnet sich das Einlassventil und der Zylinder wird mit Frischgas gespült und gefüllt.

Die Energieausbeute ist abhängig von allfälligen Leckverlusten, die ihrerseits durch die Wahl der Abdichtung zwischen Kolben und Zylinder beeinflusst sind.

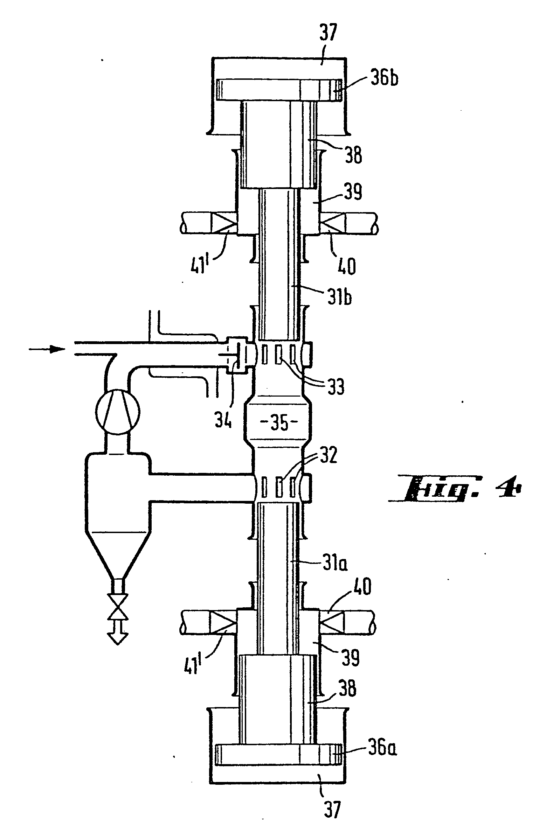

Als weiteres Ausführungsbeispiel ist in Fig. 4 eine Doppel-kolben-Maschine dargestellt. Hier sind zwei Kolben 31a und 31b vorhanden, die sich gegenläufig bewegen. In der gezeichneten Stellung hat der eine Kolben 31a den Auslassschlitz 32 geöffnet, der andere den Einlassschlitz 33. Damit der relativ hohe Druck gemäss Punkt 4 in Fig. 2 nicht in die Einlassleitung zurückschlägt, ist hier ein Rückschlagventil 34 vorgesehen. Sowie der Druck auf den Punkt 1 gefallen ist, wird der Zylinder mit Frischgas gespült und gefüllt. Anschliessend bewegen sich beide Kolben gleichzeitig nach innen, verdichten das Gas entlang der Linie 1—2 und schieben es in die Reaktionskammer 35.

Die gegenläufige Bewegung der Kolben 31a und 31b kann durch einen nicht gezeichneten Kurbelantrieb erzwungen werden. Beispiele für solche Anordnungen sind aus dem Dieselmotorbau bekannt.

Gemäss Fig. 4 kann ein Kurbelantrieb auch vermieden werden, indem jeder Kolben 31a und 31b mit einem grösseren Kolben 36a und 36b verbunden wird, der auf einem Druckgas-Polster 37 ruht. Der Druck im Gaspolster 37 treibt nach Beendigung der Zylinderfüllung die Kolben 31 nach innen, komprimiert das Gas und schiebt es in die Kammer 35. Sobald dort durch die Polymerisation Energie erzeugt wird, werden beide Kolben wieder nach aussen geschoben und die Kolben 36 komprimieren das Gas im Polster 37 und speichern dort Energie für den nächsten Kompressionshub.

Dabei kann die gegenläufige Bewegung der Kolben 31 durch ein nicht gezeichnetes Synchronisier-Getriebe gesichert werden, das an und für sich zum bekannten Stand der Technik gehört.

Die Energie, die von dieser Maschine erzeugt wird, kann allerdings nicht zum direkten Antrieb eines Generators verwendet werden, weil keine Drehbewegung vorhanden ist; sie muss also auf andere Weise genutzt werden, indem z.B. Kompressorkolben 38 angetrieben werden. Das von dem Kolben 38 in den Zylindern 39 komprimierte Gas kann anschliessend zum Antrieb einer Turbine dienen; ebenfalls kann durch die Kolben 38 das Prozessgas vorverdichtet werden, das dem Kreislauf zugesetzt wird. Mit 40 bzw. 41' sind die schematisch dargestellten, mit-ventilen versehen Zu- und Abführleitungen bezeichnet. Ein Antrieb gemäss Fig. 4 ohne Kurbelwelle ist sinngemäss auch bei der Anordnung nach Fig. 1 mit nur einem Kolben möglich.

Eine Ausführungsform des in Fig. 1 schematisch dargestellten Kompressors ist in Fig. 5 als Beispiel gezeigt.

Der Zylinder 41 mit dem als Reaktionskammer dienenden Arbeitsraum 42 ist ein starkwandiges Schmiedestück und kann erforderlichenfalls durch Schrumpfung verstärkt werden. Der als Plunger ausgebildete Kolben 43 ist in einer Büchse 44 geführt und gedichtet; zur Verbesserung der Dichtung und Verminderung der Abnützung kann der Büchse 44 über eine Bohrung 45 ein geeignetes Schmiermittel zugeführt werden. Ohne wesentliche Aenderung der Konstruktion kann die Kolbenabdichtung auch auf andere Weise, z.B. mit Kolbenringen, erfolgen.

In der gezeichneten Stellung gibt der mit Ausnehmungen 43a versehene Kolben 43 die Auspuffschlitze 46 frei und der Zylinderinhalt entleert sich über die Leitung 47 in den nicht gezeichneten Abscheider, in welchem ein Druck von beispielsweise 240 bar herrscht. Durch konventionelle Dichtungselemente 48 wird dieser Druck nach aussen abgedichtet und evtl. Leckverluste werden durch den Kanal 49 abgeleitet. Ein weiteres Dichtungselement 50 verhindert den Austritt von Gas ins Freie.

Im Ventilkopf 51 ist das selbsttätige Einlassventil 52 konventioneller Bauart angebracht, dem das Gas über die Leitung 53 zugeführt wird. Konzentrisch in diesem Ventilkopf ist die Einspritzdüse 54 für den Katalysator angebracht, der über die Leitung 55 zugeführt wird.

Durch einen Kranz langer elastischer Schrauben 56 werden der Ventilkopf 51 und das Bodenstück 57 zusammengezogen. Im Falle eines unvorhergesehenen Ueberdrucks im Zylinder können sich diese Schrauben ohne Ueberschreitung der Elastizitäts-Grenze dehnen, so dass sich der Ventilkopf 51 vom Zylinder 41 abhebt; der Ueberdruck kann dann ohne Gefahr durch Bohrungen 58 entweichen.

Der Zylinder 41 ist mit einem Heizmantel 59 umgeben, damit er im Stillstand warm gehalten werden kann; damit lässt sich ein Festwerden des Produktes vermeiden.

Die Erfindung ist nicht auf die geschilderten Ausführungs-beispiele beschränkt. Der in Fig. 1 erläuterte Prozess könnte im Prinzip in jeder volumetrischen Maschine durchgeführt werden, in welcher ein Volumen vorhanden ist, dessen Grösse sich periodisch ändert. Die bekannten Bauarten von rotierenden Maschinen eignen sich jedoch weniger gut zur Bewältigung der ausserordentlich hohen Drücke. Daher empfiehlt sich die Verwendung von Kolben und Zylindern, weil die Probleme der Festigkeit und der Abdichtung hierbei mit bekannten Mitteln der Technik gelöst werden können.

Da das Diagramm der Fig. 2 eine starke Aehnlichkeit mit dem Diagramm einer Dieselmaschine aufweist, kann der Prozess sowohl im Zweitakt- als auch im Viertakt-Verfahren durchgeführt werden.

Beim Zweitakt-Verfahren erfolgt der Wechsel der Ladung 4—1 in der Nähe des äusseren Totpunktes in bekannter Weise durch das Oeffnen von Schlitzen und/oder von Ventilen.

Beim Viertakt-Verfahren folgt auf den Expansionshub 2—3—4 in bekannter Weise ein dritter Hub zum Ausschieben der Ladung und ein vierter Hub zur Füllung des Zylinders mit frischer Ladung.

Als Katalysator bzw. Initiator können die für die Hochdruck-Polymerisation von Aethylen bekannten Substanzen verwendet werden. Dabei kommen Gase oder Flüssigkeiten in Frage; als Beispiele seien lediglich Sauerstoff, Radikale bildende Substanzen wie Azo-Verbindungen oder Peroxide genannt. Neben den eigentlichen Katalysatoren bzw. Initiatoren können, wie bekannt, zusätzlich auch sogenannte Kettenüberträger im Reaktionsraum anwesend sein, wie z.B. Wasserstoff oder aliphatische oder alicyklische Kohlenwasserstoffe.

Zum eigentlichen Einführen des Katalysators eignen sich Einspritzventile, die — wenn der Katalysator in flüssiger Lösung bzw. Form eingespritzt wird — ähnlich den für die Einspritzung von Brennstoff bei Dieselmotoren bekannten Ventilen gebaut sein können. Solche Ventile erlauben auch mit bekannten Mitteln eine mengenmässige Dosierung sowie eine Verstellung von Einspritzbeginn und -ende. Damit wird ermöglicht, dass der Katalysator über einen vorbestimmten Bereich des Expansionstaktes eingeführt werden kann, insbesondere auf eine vom Druckverlauf zwischen den Punkten 2 und 3 (Fig. 2) gesteuerte Weise, derart, dass die eingespritzte Menge vermindert bzw. ganz unterbrochen wird, wenn der Druck im Reaktionsraum übermässig ansteigen sollte. Hierzu stehen bekannte elektronische Steuerungen zur Verfügung.

Weil die Eigenschaften der Polymerisate vom Druckzustand während der Polymerisation abhängen können, empfiehlt es sich, die Steuerung im Sinne eines über einen Anfangsbereich des Expansionstaktes etwa gleichbleibenden Druckes im Arbeitsraum des Kompressors vorzunehmen.

Es ist aber für gewisse Polymerisat-Qualitäten auch möglich, ohne eine solche Steuerung zu arbeiten. In einem solchen Falle kann der Katalysator bereits in vorbestimmter Menge während des Kompressionshubes in den Reaktionsraum eingeführt werden. Die Polymerisation findet dann statt, wenn der für die Reaktion notwendige Zustand bezüglich Druck und Temperatur erreicht wird. Die Polymerisation kann dabei unter Umständen vor Erreichen des inneren Totpunktes des Kompressorkolbens einsetzen.

Eine Einfuhr des Katalysators während des Expansionstaktes muss auch nicht im unmittelbaren Bereich des inneren Totpunktes des Kompressorkolbens erfolgen. Sie kann auch erst nach einer vorbestimmten, katalysatorfreien Expansion des im Arbeitsraum des Kompressors befindlichen Gases erfolgen.

Damit lässt sich ebenfalls der Polymerisationsdruck auf einen im Hinblick auf die gewünschte Produkte-Qualität geeigneten Wert einstellen.

Für die untere Druckstufe des Kreisprozesses, d.h. für den Druck entsprechend Punkt 1 im Diagramm nach Fig. 2, wird zweckmässig ein Wert unterhalb 300 bar gewählt, vorzugsweise ein Wert zwischen 150 und 250 bar. Die obere Druckstufe liegt zweckmässig oberhalb 1000 bar, vorzugsweise zwischen 2000 und 3000 bar.

Die Erfindung ist auch nicht auf die Polymerisation von Aethylen beschränkt. Sie lässt sich auf die Erzeugung anderer Polymerisate anwenden unter Verwendung dafür geeigneter Katalysatoren bzw. Initiatoren.

**Patentansprüche**

1. Verfahren zur intermittierenden Polymerisation bei erhöhtem Druck, insbesondere zur Herstellung von Polyäthylen, dadurch gekennzeichnet, dass die zu polymerisierende Substanz in Gas- oder Dampfform taktweise dem Arbeitsraum (13, 35, 42) eines volumetrisch zwischen zwei Druckstufen arbeitenden Kompressors zugeführt und im Arbeitsraum komprimiert wird, und dass ein die Polymerisation steuernder Katalysator spätestens im Anfangsbereich der Expansion im Arbeitsmittelraum (13, 35, 42) des Kompressors anwesend ist. pressors anwesend ist.

2. Verfahren nach Anspruch 1, dadurch gekennzeichnet, dass der Katalysator im Bereich der oberen Druckstufe in den Arbeitsmittelraum eingeführt wird.

3. Verfahren nach Anspruch 2, dadurch gekennzeichnet, dass der Katalysator über einen vorbestimmten Bereich des Expansionstaktes in gesteuerter Menge eingeführt wird.

4. Verfahren nach Anspruch 1, dadurch gekennzeichnet, dass die Steuerung im Sinne eines über einen Anfangsbereich des Expansionstaktes etwa gleichbleibenden Druckes im Arbeitsraum des Kompressors erfolgt.

5. Verfahren nach Anspruch 1, dadurch gekennzeichnet, dass der Kompressor im Zweitakt betrieben wird, derart, dass in einem ersten Arbeitstakt die Kompression der zu polymerisierenden Substanz und im anschliessenden Arbeitstakt die Polymerisation und die Expansion erfolgen, wobei der Ladungswechsel im Endbereich des zweiten Taktes durchgeführt wird.

6. Verfahren nach Anspruch 1, dadurch gekennzeichnet, dass der Kompressor im Viertakt betrieben wird, derart, dass in einem ersten Arbeitstakt die Kompression der zu polymerisierenden Substanz, in einem zweiten Arbeitstakt die Polymerisation und die Expansion, in einem dritten Arbeitstakt das Ausstossen der im Arbeitsraum befindlichen Ladung und in einem vierten Arbeitstakt die Füllung mit neuer Ladung erfolgen.

7. Verfahren nach Anspruch 1, dadurch gekennzeichnet, dass die untere Druckstufe unterhalb 300 bar, vorzugsweise zwischen 150 und 250 bar, und die obere Druckstufe oberhalb 1000 bar, vorzugsweise 2000 bis 3000 bar liegen.

8. Verfahren nach Anspruch 1, dadurch gekennzeichnet, dass die bei der oberen Druckstufe sich einstellende Temperatur der im Arbeitsraum befindlichen Ladung durch Zu- oder Abfuhr von Wärme in bzw. aus der dem Kompressor auf der unteren Druckstufe zugeführten Substanz eingestellt wird.

9. Verfahren nach Anspruch 1, dadurch gekennzeichnet, dass nach erfolgter Expansion im Kompressor die Ladung in einem Abscheider (18) von der mitgeführten polymerisierten Substanz befreit und hernach zusammen mit frischer Substanz erneut dem Kompressor zugeführt wird.

10. Verfahren nach Anspruch 1, dadurch gekennzeichnet, dass die infolge Polymerisation freiwerdende Energie durch arbeitsleistende Entspannung der Ladung ausgenützt wird.

11. Verfahren nach Anspruch 1, dadurch gekennzeichnet, dass die Höhe der oberen Druckstufe durch Veränderung des schädlichen Raumes des Kompressors der jeweils gewünschten Produktequalität angepasst wird.

12. Verfahren nach Anspruch 1, dadurch gekennzeichnet, dass die Einführung des Katalysators nach einer vorbestimmten, katalysatorfreien Expansion der im Arbeitsraum (13, 35, 42) des Kompressors befindlichen Substanz erfolgt zwecks Anpassung des Polymerisationsdrucks an die jeweils gewünschte Produktequalität.

13. Anlage zur Durchführung des Verfahrens nach Anspruch 1, gekennzeichnet durch einen volumetrisch arbeitenden Kompressor mit mindestens einem Arbeitsraum (13, 35, 42), der an eine Zuführleitung (11) für die zu polymerisierende Substanz angeschlossen ist, weiter durch Mittel (54) zum Einführen eines die Polymerisation steuernden Katalysators bzw. Initiators in die zu polymerisierende Substanz sowie durch Mittel (18) zum Abscheiden des Polymerisats aus der auf einen Teildruck entspannten Ladung.

14. Anlage nach Anspruch 13, dadurch gekennzeichnet, dass der Kompressor als Hubkolbenkompressor ausgebildet ist.

15. Anlage nach Anspruch 14, dadurch gekennzeichnet, dass der Hubkolbenkompressor mit mindestens einem Saugventil (12, 52) für die Steuerung des Einlasses und mit vom Kolben (15, 43) gesteuerten Schlitzen (16, 46) im Zylinder zur Steuerung des Auslasses versehen ist.

16. Anlage nach Anspruch 13, dadurch gekennzeichnet, dass die Mittel zum Einführen des Katalysators als Einspritzventile (54) angebildet sind.

17. Anlage nach Anspruch 13, gekennzeichnet durch einen Wärmeaustauscher (23) zur Kühlung oder Heizung der dem Kompressor zugeführten Ladung.

18. Anlage nach Anspruch 13, gekennzeichnet durch eine auf Ueberdruck im Arbeitsraum des Kompressors ansprechende Sicherheitsvorrichtung (56, 58).

19. Anlage nach Anspruch 14, dadurch gekennzeichnet, dass der Kompressor als Doppelkolben-Maschine mit gegenläufigen Kolben (31a, 31b) ausgebildet ist.

Claims

1. Process for intermittent polymerisation at elevated pressure, particularly for the production of polyethylene, characterised in that the substance to be polymerised is fed cyclically in gas or vapour form to the working space (13, 35, 42) of a compressor working volumetrically between two pressure levels and is compressed in the working space, and that a catalyst controlling the polymerisation is present at the latest in the initial region of the expansion in the working medium space (13, 35, 42) of the compressor.

2. Process as claimed in Claim 1 characterised in that the catalyst is introduced into the working medium space in the region of the upper pressure level.

3. Process as claimed in Claim 2 characterised in that the catalyst is introduced in a controlled quantity over a predetermined range of the expansion stroke.

4. Process as claimed in Claim 1 characterised in that the control occurs in the working space of the compressor in accordance with a pressure remaining approximately constant over an initial region of the expansion stroke.

5. Process as claimed in Claim 1 characterised in that the compressor is driven in a two-stroke cycle in such a manner that in a first working stroke the compression of the substance to be polymerised occurs and in the following working stroke the polymerisation and the expansion occur, whereby the loading change is effected in the end region of the second stroke.

6. Process as claimed in Claim 1 characterised in that the compressor is driven in a four-stroke cycle in such a manner that in a first working stroke the compression of the substance to be polymerised occurs, in a second working stroke the polymerisation and the expansion occur, in a third working stroke the discharge of the load situated in the working space occurs and in a fourth working stroke the charging with a new load occurs.

7. Process as claimed in Claim 1 characterised in that the lower pressure level lies below 300 bar, preferably between 150 and 250 bar, and the upper pressure level lies above 1000 bar, preferably 2000 to 3000 bar.

8. Process as claimed in Claim 1 characterised in that the temperature taken up at the upper pressure level by the load situated in the working space is adjusted by the addition or removal of heat into or out of the substance fed to the compressor on the lower pressure level.

9. Process as claimed in Claim 1 characterised in that after the expansion has occurred in the compressor the load is freed of the entrained polymerised substance in a separator (18) and thereafter is fed again together with fresh substance to the compressor.

10. Process as claimed in Claim 1 characterised in that the energy liberated as a consequence of the polymerisation is used by a work-performing expansion of the load.

11. Process as claimed in Claim 1 characterised in that the magnitude of the upper pressure level is matched to the particular desired product quality by changing the dead space of the compressor.

12. Process as claimed in Claim 1 characterised in that the introduction of the catalyst occurs after a predetermined catalyst-free expansion of the substance situated in the working space (13, 35, 42) of the compressor for the purpose of matching the polymerisation pressure to the particular desired product quality.

13. Apparatus for carrying out the process as claimed in Claim 1, characterised by a volumetrically working compressor with at least one working space (13, 35, 42), which is connected to a feed line (11) for the substance to be polymerised, also by means (54) for introducing a catalyst or initiator controlling the polymerisation into the substance to be polymerised and by means (18) for separating the polymeride from the load expanded down to a partial pressure.

14. Apparatus as claimed in Claim 13 characterised in that the compressor is constructed as a piston compressor.

15. Apparatus as claimed in Claim 14 characterised in that the piston compressor is provided with at least one suction valve (12, 52) for the control of the inlet and with slots controlled by the piston (15, 43) in the cylinder for the control of the outlet.

16. Apparatus as claimed in Claim 13 characterised in that the means for introducing the catalyst is constructed as an injection valve (54).

17. Apparatus as claimed in Claim 13 characterised by a heat exchanger (23) to cool or heat the load fed to the compressor.

18. Apparatus as claimed in Claim 13 characterised by a safety device (56, 58) responsive to an overpressure in the working space of the compressor.

19. Apparatus as claimed in Claim 14 characterised in that the compressor is constructed as a double piston machine with opposed pistons (31a, 31b).

## Revendications

1. Procédé pour la polymérisation intermittente à pression élevée, en particulier pour fabriquer des polyéthylènes, caractérisé en ce que la substance à polymériser est conduite, sous forme gazeuse ou sous forme vapeur en cadence, à la chambre de travail (13, 35, 42) d'un compresseur travaillant volumétriquement entre deux étages de pression et est comprimée dans la chambre de travail, et en ce qu' un catalyseur commandant la polymérisation est présent dans la chambre du milieu de travail (13, 35, 42) au plus tard dans la partie initiale de l'expansion.

2. Procédé selon la revendication 1, caractérisé en ce que le catalyseur dans la zone de l'étage supérieur de pression est introduit dans la chambre du milieu de travail.

3. Procédé selon la revendication 2, caractérisé en ce que le catalyseur est introduit en quantité commandée sur une partie prédéterminée de la cadence d'expansion.

4. Procédé selon la revendication 1, caractérisé en ce que la commande a lieu dans la chambre de travail du compresseur sous la forme d'une pression, à peu près constante sur une partie initiale de la cadence d'expansion.

5. Procédé selon la revendication 1, caractérisé en ce que le compresseur fonctionne en deux temps, en ce que dans un premier temps de travail la compression de la substance à polymériser a lieu et dans la cadence suivante de travail la polymérisation et l'expansion ont lieu, le changement de charge étant effectué dans la partie finale de la deuxième cadence.

6. Procédé selon la revendication 1, caractérisé en ce que le compresseur fonctionne à quatre temps de telle manière que dans un premier temps ou cadence de travail, la compression de la substance à polymériser ait lieu, dans un second temps de travail la polymérisation et l'expansion aient lieu, dans un troisième temps de travail l'expulsion de la charge se trouvant dans la chambre de travail ait lieu et dans un quatrième temps de travail, le remplissage d'une nouvelle charge prenne place.

7. Procédé selon la revendication 1, caractérisé en ce que l'étage inférieur de pression est situé en dessous de 300 bars, de préférence entre 150 et 250 bars et l'étage de pression supérieur est au-dessus de 1000 bars, de préférence de 2000 à 3000 bars.

8. Procédé selon la revendication 1, caractérisé en ce que la température, régnant à l'étage supérieur de pression, de la charge se trouvant dans la chambre de travail est réglée par fourniture ou évacuation de chaleur vers la substance amenée au compresseur à l'étage inférieur de puissance, ou hors de celle-ci.

9. Procédé selon la revendication 1, caractérisé en ce qu'après réalisation de l'expansion dans le compresseur, la charge est libérée dans un séparateur (18) de la substance polymérisée entraînée et ensuite est conduite à nouveau au compresseur en compagnie de substance fraîche.

10. Procédé selon la revendication 1, caractérisé en ce que l'énergie devenue libre à la suite de la polymérisation est mise à profit par une détente, fournissant du travail, de la charge.

11. Procédé selon la revendication 1, caractérisé en ce que la hauteur de l'étage supérieur de pression est adaptée à la qualité de produit respective désirée, par modification de l'espace nuisible du compresseur.

12. Procédé selon la revendication 1, caractérisé en ce que l'introduction du catalyseur, après une expansion prédéterminée exempte de catalyseur de la substance se trouvant dans la chambre de travail (13, 35, 42) du compresseur, a lieu pour adapter la pression de polymérisation à la qualité de produit respective désirée.

13. Installation pour mettre en oeuvre le procédé selon la revendication 1, caractérisée par un compresseur travaillant volumétriquement ayant au moins une chambre de travail (13, 35, 42) qui est raccordée à une conduite d'arrivée (11) pour la substance à polymériser, de plus par des moyens (54) pour introduire un catalyseur ou un initiateur commandant la polymérisation dans la substance à polymériser, ainsi que par des moyens (18) pour séparer le polymérisat de la charge, détendue à une pression partielle.

14. Installation selon la revendication 13, caractérisée en ce que le compresseur est conformé en compresseur à piston à course.

15. Installation selon la revendication 14, caractérisée en ce que le compresseur à piston à course est muni d'au moins une soupape de succion (12, 52) pour la commande de l'entrée et de fentes (16, 46) commandées par le piston (15, 43) se trouvant dans le cylindre pour commander la sortie.

16. Installation selon la revendication 13, caractérisée en ce que les moyens pour introduire le catalyseur sont conformés comme des soupapes d'injection (54).

17. Installation selon la revendication 13, caractérisée par un échangeur de chaleur (23) pour refroidir ou réchauffer la charge arrivant au compresseur.

18. Installation selon la revendication 13, caractérisée par un dispositif de sécurité (56, 58) répondant à une surpression dans la chambre de travail du compresseur.

19. Installation selon la revendication 14, caractérisée en ce que le compresseur est conformé comme une machine à double piston avec pistons à mouvement contraire (31a, 31b).

_Fig. 1_

_Fig. 2_

_Fig. 3a_

_Fig. 3b_

_Fig. 3c_

**Fig. 4**

**0018431**

*Fig. 5*